# EUROPEAN PATENT SPECIFICATION

(11) **EP 2 138 739 B1**
(45) Date of publication and mention of the grant of the patent: **26.12.2012**
(21) Application number: 07741641.0
(22) Date of filing: 13.04.2007
(51) Int. Cl.: F16H 15/38, F16H 57/04

(54) **HALF-TOROIDAL TYPE CONTINUOUSLY VARIABLE TRANSMISSION**
STUFENLOSES HALBTOROIDGETRIEBE
TRANSMISSION À VARIATION CONTINUE DE TYPE SEMI-TOROÏDAL

(43) Date of publication of application: 30.12.2009
(73) Proprietor: NSK Ltd., Tokyo 141-8560 (JP); Volkswagen Aktiengesellschaft, 38440 Wolfsburg (DE)
(72) Inventor: TENBERGE, Peter, 09123 Chemnitz (DE); MÖCKEL, Jörg, 38524 Sassenburg (DE); INOUE, Eiji, Fujisawa-Shi, Kanagawa 251-8501 (JP); NISHII, Hiroki, Fujisawa-Shi, Kanagawa 251-8501 (JP); SUE, Armin, 38527 Meine (DE); PETERSEN, Rainer, 38444 Wolfsburg (DE)
(74) Representative: Hübsch, Dirk
(86) International application number: PCT/JP2007/058205
(87) International publication number: WO 2008/129651

(56) References cited:
- DE-A1- 10 246 432
- DE-A1-102006 055 677
- JP-A- 2003 184 978
- JP-A- 2003 184 978
- JP-A- 2006 029 354
- JP-A- 2006 250 158
- JP-A- 2007 107 703
- US-A1- 2003 060 324

## Description

### TECHNICAL FIELD

The present invention relates to an improvement in half-toroidal type continuously variable transmissions made use of as a continuously variable transmission for automobiles. Specifically, the invention is directed to realization of a construction, which can transmit a large motive power and can be made comparatively small in size, and by which displacement of a power roller relative to a trunnion is smoothly made to enable ensuring a high transmission efficiency.

### BACKGROUND ART

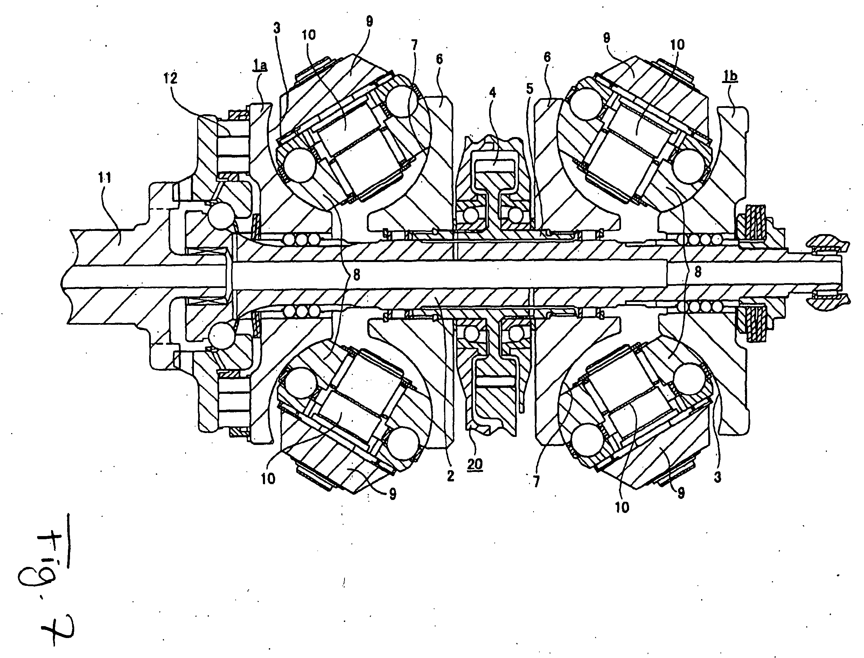

Use of a half-toroidal type continuously variable transmission as a continuously variable transmission for automobiles is described in many publications such as non-Patent Documents 1 and 2, etc. and is partially carried out to be well-known. Fig. 7 shows a fundamental construction of half-toroidal type continuously variable transmissions presently embodied. First, a simple explanation will be given to the conventional construction. A pair of input side disks 1a, 1b are supported on an input rotating shaft 2 to be concentric relative to each other and capable of synchronous rotation in a state, in which input side inner side surfaces 3, 3, respectively, defined by a toroidally curved surface (concave surface being arcuate in section) and corresponding to an axial one-side surface described in the claims are caused to face each other.

Also, an output cylinder 5 fixing an output gear 4 to an intermediate, outer peripheral surface thereof is supported around an intermediate portion of the input rotating shaft 2 to be capable of rotation relative to the input rotating shaft 2. Also, output side disks 6, 6 are supported at both ends of the output cylinder 5 through spline engagement to be capable of rotation in synchronism with the output cylinder 5. In this state, output side inner side surfaces 7, 7, respectively, defined by a toroidally curved surface and corresponding to an axial one-side surface described in the claims are caused to face the input side inner side surfaces 3, 3.

Also, power rollers 8, 8 each having a peripheral surface, which defines a spherically convex surface, are arranged two by two in intermediate regions (cavities) of the both input and output side inner side surfaces 3, 7 around the input rotating shaft 2. The respective power rollers 8, 8, respectively, are supported on inner side surfaces of trunnions 9, 9 through support shafts 10, 10, of which base half portions and tip half portions are eccentric relative to each other, and a plurality of rolling bearings to be capable of rotation around the tip half portions of the respective support shafts 10, 10 and swinging a little about the base half portions of the respective support shafts 10, 10.

Also, the respective trunnions 9, 9 are capable of swinging displacement about pivot shafts, which are provided at both ends thereof in length directions (front-back directions of Fig. 7) to be concentric relative to each other for the respective trunnions 9, 9. Motions of swinging (inclination) of the respective trunnions 9, 9 are imparted by using hydraulic actuators to displace the respective trunnions 9, 9 in axial directions of the respective pivot shafts. At the time of speed change, a pressure oil is fed to or exhausted from the respective actuators to displace the respective trunnions 9, 9 in axial directions of the respective pivot shafts. Consequently, since forces acting in tangential directions of contact regions (traction regions) between the peripheral surfaces of the respective power rollers 8, 8 and the respective input and output side inner side surfaces 3, 7 are varied in direction (since side slip is generated), the respective trunnions 9, 9 make swinging displacement about the respective pivot shafts.

When the toroidal type continuously variable transmission described above is operated, a driving shaft 11 rotationally drives one 1a of the input side disks (on the left in Fig. 7) through a loading cam type pressing device 12. Consequently, the pair of input side disks 1a, 1b supported at the both ends of the input rotating shaft 2 rotate in synchronism with each other while being pushed in a mutually approaching direction. Such rotation is transmitted to the both output side disks 6, 6 through the respective power rollers 8, 8 to be taken out from the output gear 4.

In the case where reduction in speed is to be first effected between the input rotating shaft 2 and the output gear 4 when the ratio of the input rotating shaft 2 and the output gear 4 in rotating speed is to be changed, the respective trunnions 9, 9 are caused to swing to positions shown in Fig. 7 to have the peripheral surfaces of the respective power rollers 8, 8 abutting against central portions of the input side inner side surfaces 3, 3 of the respective input side disks 1a, 1b and outer peripheral portions of the output side inner side surfaces 7, 7 of the both output side disks 6, 6. On the contrary, when an increase in speed is to be effected, the respective trunnions 9, 9 are caused to swing in opposite directions to those in Fig. 7 to have the peripheral surfaces of the respective power rollers 8, 8 abutting against outer peripheral portions of the input side inner side surfaces 3, 3 of the both input side disks 1a, 1b and central portions of the output side inner side surfaces 7, 7 of the both output side disks 6, 6. When the respective trunnions 9, 9 are caused to swing at intermediate angles, an intermediate speed ratio (change gear ratio) between the input rotating shaft 2 and the output gear 4 is obtained.

With the conventional construction shown in Fig. 7, the power rollers 8, 8 are provided two by two every cavity and so four in total. Since the four power rollers 4, 4 are provided in parallel in a direction of power transmission, the four power rollers 4, 4 transmit 1/4 by 1/4 of a motive power when the motive power is to be transmitted between the input rotating shaft 2 and the output gear 4. Accordingly, in order to increase a transmittable, motive power, it is conceivable to increase the number of power rollers provided every cavity to restrict that motive power, which is transmitted by the respective power rollers, to a lower magnitude.

In view of these situations, Patent Document 1 describes the invention of a toroidal type continuously variable transmission, in which power rollers provided every cavity are three in number. A mechanism for speed change in the invention described in Patent Document 1 is the same as the conventional construction shown in Fig. 7. Therefore, actuators for displacement of respective trunnions in axial directions of pivot shafts are bulky, so that it is hard to make a whole, toroidal type continuously variable transmission small in size and weight. In view of these situations, Patent Document 2 describes a construction, in which trunnions provided three by three every cavity, that is, six in total are supported on swinging frames to be capable of swinging and the respective trunnions are caused to make displacement for speed change on the basis of swinging of the swinging frames. The construction of the invention described in Patent Document 2 makes it easy to accomplish miniaturization-lightening as compared with the invention described in Patent Document 1. However, there is a possibility that adequate miniaturization-lightening cannot be accomplished according to conditions as in case of being embodied as a continuously variable transmission for compact automobiles, on which a high output engine is mounted.

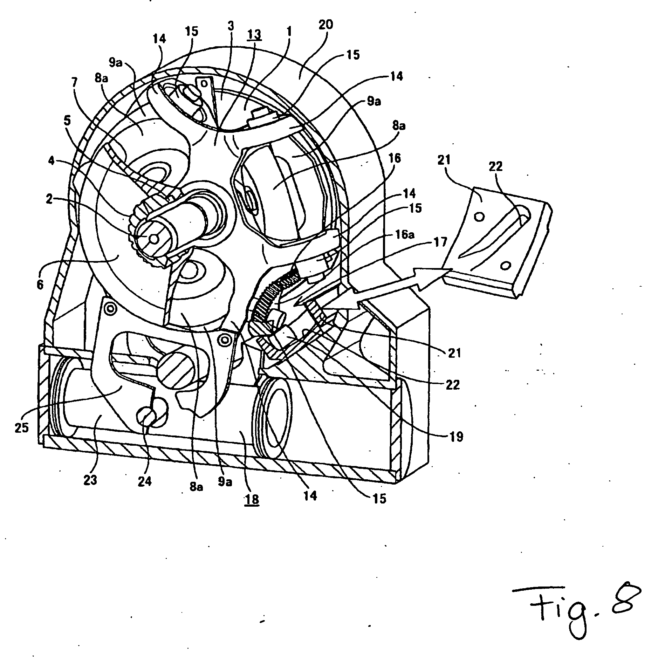

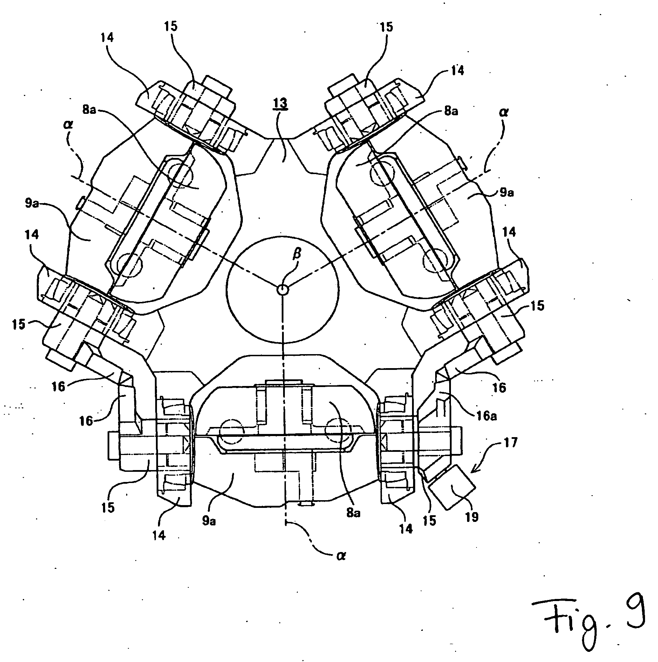

As the invention of a construction thought in view of these situations, one described in Patent Document 3 is known. A toroidal type continuously variable transmission described in Patent Document 3 comprises a transmission mechanism shown in Figs. 8 and 9. With the conventional construction shown in Figs. 8 and 9, a swinging frame 13 is provided in an intermediate region between both input and output side disks 1, 6 around an input rotating shaft 2 to be able to swing about the input rotating shaft 2. Three trunnions 9a, 9a supporting power rollers 8a, 8a rotatably on inner side surfaces thereof are supported between support plate portions 14, 14, which are provided at radially outer ends of the swinging frame 13, to be able to only swing about pivot shafts 15, 15 provided at both ends thereof. Unlike the construction shown in Fig. 7, the respective trunnions 9a, 9a are not displaced relative to the swinging frame 13 in axial directions of the pivot shafts 15, 15. In this state, extensions α, α of central axes of the respective power rollers 8a, 8a intersect each other on a central axis β of the both disks 1, 6.

Also, sector gears 16, 16a are fixed to the remaining pivot shafts 15, 15 except the two pivot shafts 15, 15 positioned at upper ends of Figs. 8 and 9, out of the respective pivot shafts 15, 15. The sector gears 16, 16a related to the circumferentially adjacent trunnions 9a, 9a mesh with each other. With the construction, all the trunnions 9a, 9a are inclined at the same angle in the same direction relative to a direction, in which a change gear ratio is changed. Further, any sector gear 16a (rightwardly lower region in Figs. 8 and 9) out of the respective sector gears 16, 16a is caused by a cam device 17 and an actuator 18 to swing about the pivot shaft 15, to which the sector gear 16a is fixed.

The cam device 17 comprises a cam follower 19 supported on the one sector gear 16a and a cam member 21 fixed to an inner surface of a housing 20, in which a toroidal type continuously variable transmission is accommodated. A cam groove 22 provided on the cam member 21 and the cam follower 19 are caused to engage with each other. Also, the actuator 18 is of a hydraulic double-action type, in which motions of a pin 24 engaged by a slot provided on a piston 23 are transmitted to the swinging frame 13 through a joint bracket 25 to swing the swinging frame 13 about the input rotating shaft 2. As the swinging frame 13 swings, the positional relationship between the cam follower 19 supported on the one sector gear 16a and the cam groove 22 is changed, so that the sector gear 16a swings about the pivot shaft 15. Further, motions of the sector gear 16a are transmitted to all the trunnions 9a, 9a through the remaining sector gears 16, 16. Consequently, the respective power rollers 8a, 8a supported on the inner side surfaces of the respective trunnions 9a, 9a swing at the same angle in the same direction relative to a direction, in which the change gear ratio between the both input and output side disks 1, 6 is changed, so that the change gear ratio is adjusted to a desired value.

With the construction described in Patent Document 3, the respective power rollers 8a, 8a at the time of speed change only swing in a front-back direction of Fig. 9 with respect to the positional relationship relative to the swinging frame 13. In other words, for the sake of motions of speed change, the respective power rollers 8a, 8a are not displaced relative to the swinging frame 13 (even when being displaced together with the swinging frame 13 in a direction of rotation or reverse rotation of the input rotating shaft 2) in the axial directions (directions perpendicular to the extensions α, α) of the pivot shafts 15, 15. Also, the swinging frame 13 is only supported in an intermediate region between the both input and output side disks 1, 6 to enable swinging displacement at an angle required for speed change but are not displaced in an axial direction (front-back direction of Fig. 9) of the both input and output side disks 1, 6. Accordingly, the respective trunnions 9a, 9a are not displaced in the axial direction of the both input and output side disks 1, 6.

On the other hand, when the toroidal type continuously variable transmission is operated, the respective members 1, 6, 8a are elastically deformed by a force applied in order to ensure a bearing pressure on rolling contact regions (traction regions) between the inner side surfaces 3, 7 of the both disks 1, 6 and the peripheral surfaces of the respective power rollers 8a, 8a. The respective power rollers 8a, 8a are displaced in the front-back direction of Fig. 9. With the construction shown in Fig. 7, the respective power rollers 8, 8 are supported on the respective trunnions 9, 9 by the support shafts (eccentric shafts) 10, 10, of which base half portions and tip half portions are eccentric relative to each other, whereby the respective power rollers 8, 8 can be displaced as the respective constituent members are elastically deformed. With the construction shown in Figs. 8 and 9, however, it is not possible to adopt a construction, in which only eccentric shafts allow the respective power rollers 8a, 8a to swing.

This is because with the construction, in which only eccentric shafts cause the respective power rollers 8a, 8a to swing, the respective power rollers 8a, 8a are displaced in the axial directions (directions perpendicular to the extensions α, α) of the respective pivot shafts 15, 15 on the basis of arcuate motions, of which a radius of gyration amounts to an eccentricity, although being slight. As described with respect to the constructional portion shown in Fig. 7, when the respective power rollers 8a, 8a are displaced in the axial directions of the respective pivot shafts 15, 15, side slip is generated in the respective traction regions, so that forces are applied on the respective trunnions 9a, 9a through the respective power rollers 8a, 8a in a direction (direction, in which a change gear ratio is changed) of swinging about the respective pivot shafts 15, 15. Such forces are generated even in the case where the displacements are in the order of 0.1 to 0.2 mm. Of course, it is not preferred that a toroidal type continuously variable transmission continues to operate in a state, in which such side slip as described above is generated and the forces described above are applied. Specifically, the side slip is related to a decrease in transmission efficiency and durability and the forces described above are related to an increase in a force needed when a change gear ratio is to be actually changed.

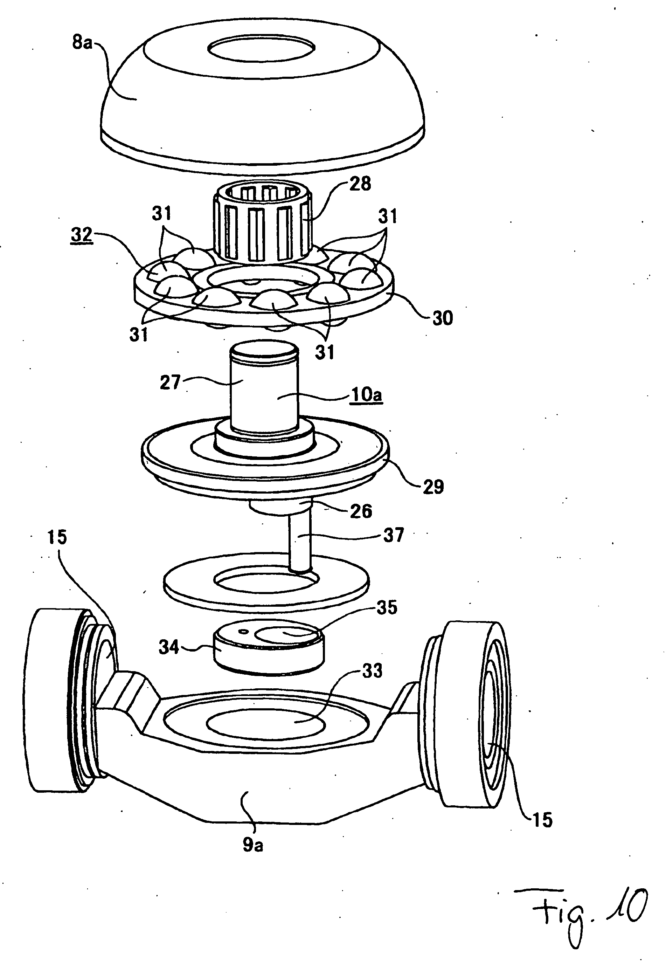

Therefore, with the construction described in Patent Document 3, the construction shown in Figs. 10 to 12 displaces the respective power rollers 8a, 8a only in the axial direction (front-back direction of Fig. 9) of the input and output side disks 1, 6 as the respective members 1, 6, 8a are elastically deformed. A support shaft 10a used in the construction to support the power roller 8a rotatably on the trunnion 9a comprises a base portion 26 and a support shaft portion 27, which are eccentric with each other. δ₁ indicates an eccentricity between a central axis X₂₆ of the base portion 26 and a central axis X₂₇ of the support shaft portion 27. The base portion 26 serves as a portion that supports the support shaft 10a to enable the same to swing relative to the trunnion 9a. Also, the support shaft portion 27 serves as a portion that supports the power roller 8a rotatably through a radial needle bearing 28. In addition, in the example shown in the figure, an outer ring 29 for a thrust bearing is provided integrally in a region between the base portion 26 and the support shaft portion 27. The outer ring 29 for a thrust bearing is combined with balls 31, 31 held on a cage 30 to constitute a thrust ball bearing 32 that supports the power roller 8a rotatably while bearing a thrust load on the power roller 8a.

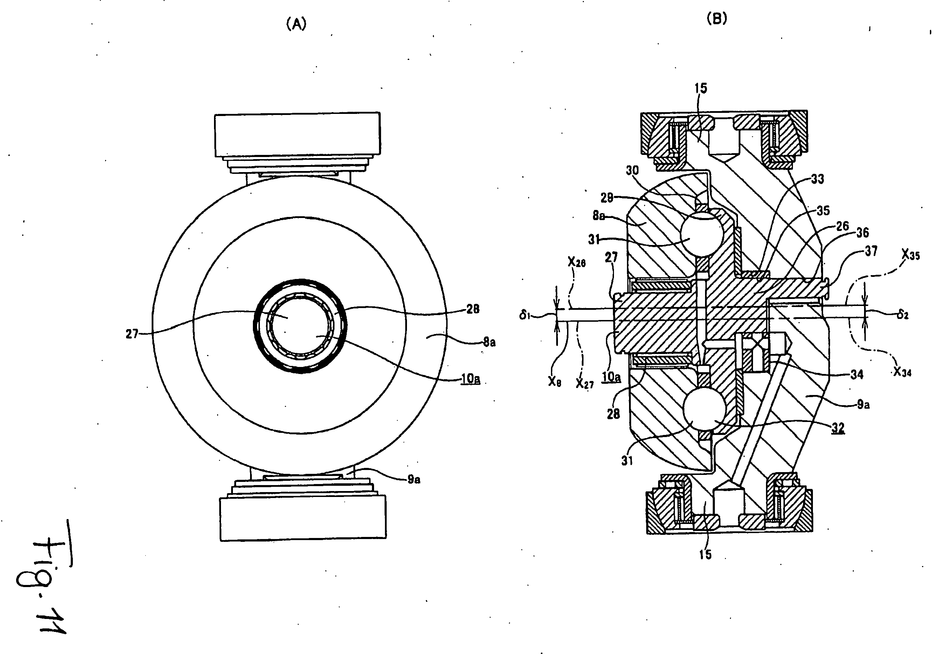

On the other hand, a circular recess 33 is formed on an intermediate portion of an inner side surface of the trunnion 9a. A circular (thick-walled disk) crank member 34 is fitted internally and rotatably in the circular recess 33. A circular hole 35 is formed in a position, which is offset from a center of the crank member 34, on a part of the crank member 34. An eccentricity δ₂ between a central axis X₃₄ of an outer peripheral surface of the crank member 34 and a central axis X₃₅ of the circular hole 35 is equal to an eccentricity δ₁ between the central axis X₂₆ of the base portion 26 and the central axis X₂₇ of the support shaft portion 27 (δ₂ =δ₁). The base portion 26 is fitted internally into the circular hole 35 without play to be able to swing. Accordingly, the central axis X₂₆ of the base portion 26 and the central axis X₃₅ of the circular hole 35 agree with each other. Also, preferably, in a neutral state, that is, in a state, in which the power roller 8a is present in a central position in a width direction (left and right direction in Fig. 11 (A)) the trunnion 9a, the central axis X₂₇ of the support shaft portion 27 and the central axis X₃₄ of the outer peripheral surface of the crank member 34 are caused to agree substantially with each other (however, the axes are not necessarily needed to agree with each other).

Further, a slot 36 being lengthy in the axial directions of the respective pivot shafts 15, 15 is formed on that portion of the trunnion 9a, which aligns with a corner of a bottom of the circular recess 33, in a state of providing communication between the bottom surface of the circular recess 33 and an outer side surface of the trunnion 9a. A guide rod 37 protrusively provided at a corner of a base end surface (right end surface in Fig. 11 (B)) of the base portion 26 on the support shaft 10a is supported in the slot 36 to enable displacement in a length direction (the axial directions of the respective pivot shafts 15, 15, or a vertical direction in Fig. 11) of the slot 36. An outside diameter of the guide rod 37 is slightly smaller than an inner dimension (width) of the slot 36. Accordingly, the guide rod 37 is not displaced substantially in a width direction of the slot 36.

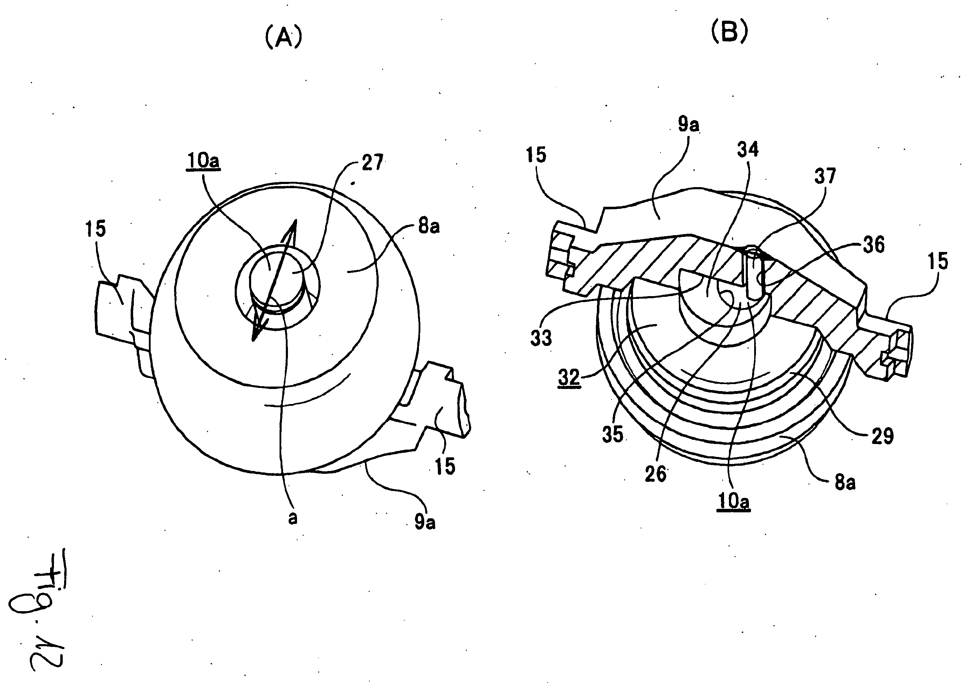

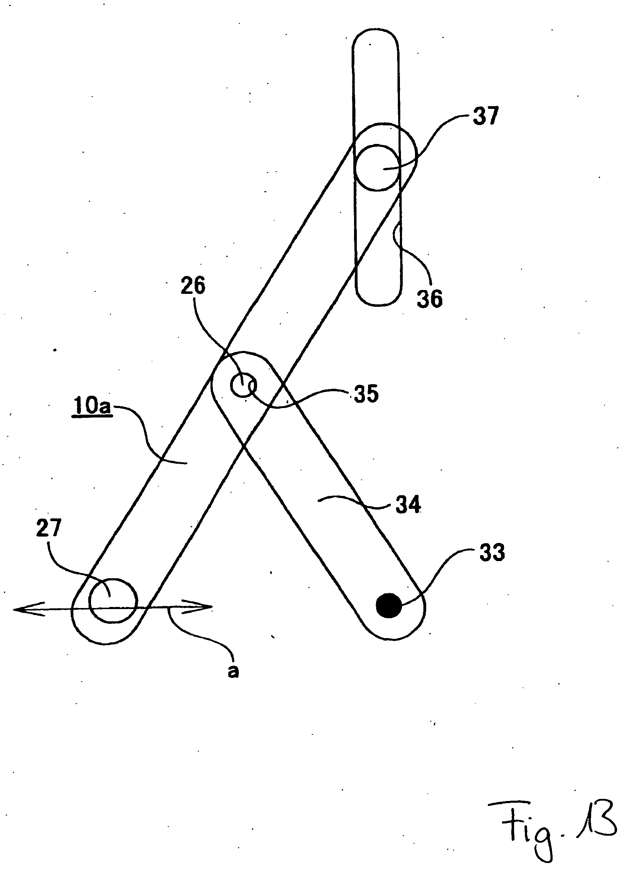

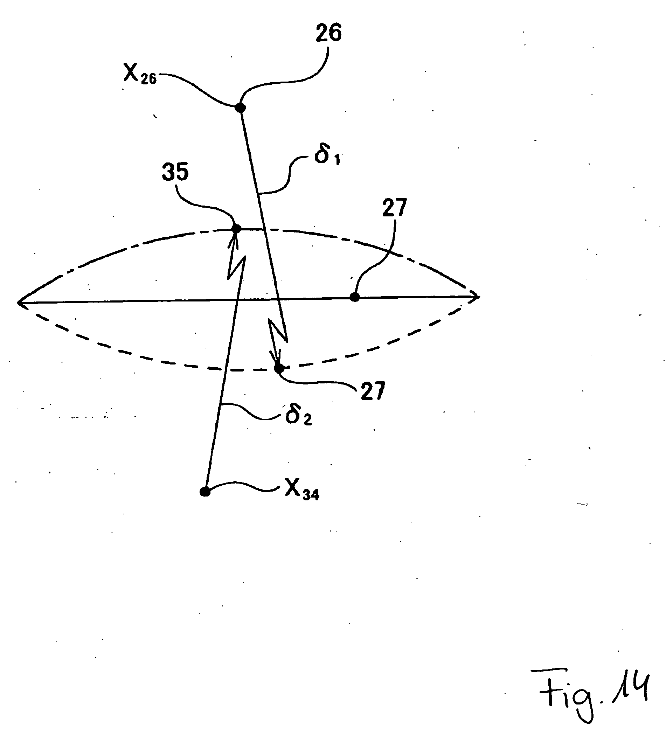

With the construction described in Patent Document 3, the arrangement described above permits the power roller 8a to be displaced only in an axial direction as shown by an arrow a in Fig. 12(A) as the both input and output side inner side surfaces 3, 7 defining axially one side surfaces of the both input and output side disks 1, 6 are displaced axially. When the power roller 8a is displaced in the direction of the arrow a, the guide rod 37 is displaced inside the slot 36 in the axial directions of the respective pivot shafts 15, 15 as shown in Fig. 12 (B). At this time; the support shaft 10a, the circular recess 33, and the crank member 34 act like a linkage shown in Fig. 13 to displace a central axis X₈ (the central axis X₂₇ of the support shaft portion 27) of the power roller 8a only in the axial directions. Because of a linkage being simple in the mechanics, those parts in Fig. 13, which correspond to those of the construction of Figs. 10 to 12, are denoted by reference numerals shown in Figs. 10 to 12, and a detailed explanation therefor is omitted. In short, as shown in Fig. 14, arcuate motions indicated by a chain line in the figure and based on the eccentricity δ₂ of the central axis X₃₅ of the circular hole 35 centering on the central axis X₃₄ of the outer peripheral surface of the crank member 34 and arcuate motions indicated by a broken line in the figure and based on the eccentricity δ₁ between the central axis X₂₆ of the base portion 26 and the central axis X₂₇ of the support shaft portion 27 are caused to cancel each other, and the support shaft portion 27 is caused to perform a linear movement as indicated by a solid line in the figure.

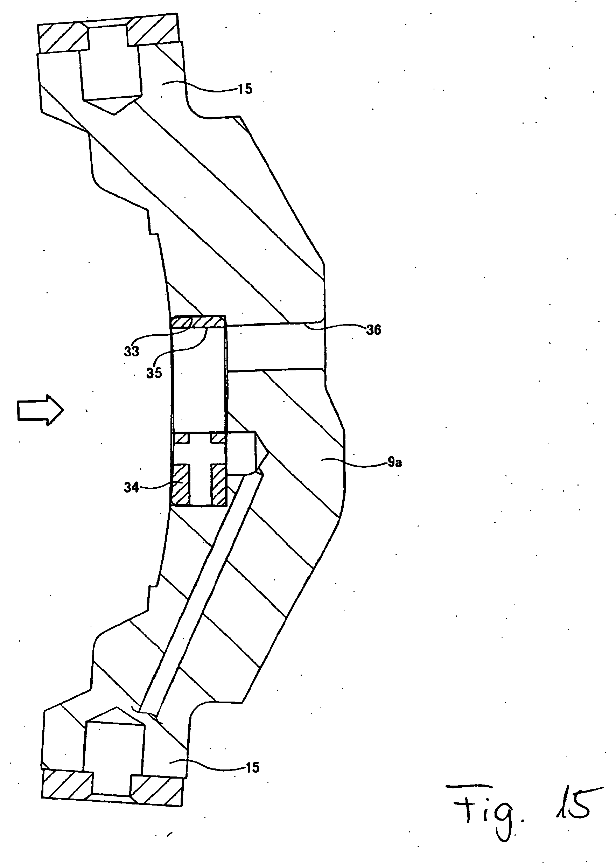

As described above, with the construction of the invention described in Patent Document 3, when the respective constituent members are elastically deformed, the power roller 8a is displaced only in the axial direction of the both input and output side disks 1, 6, thus enabling preventing a detrimental side slip from being generated in the respective traction regions. However, in order that displacement be smoothly made in the axial direction when a large torque is to be transmitted, there is a need for consideration that restricts friction, which acts between an inner peripheral surface of the circular recess 33 and the outer peripheral surface of the crank member 34, to a low extent. This will be described with reference to Fig. 15.

As well-known widely in the technical field of toroidal type continuously variable transmissions, when a toroidal type continuously variable transmission is operated, a large thrust load is applied to push the power roller 8a toward the inner side surface of the trunnion 9a. In addition, such thrust load is generated in case of a half-toroidal type continuously variable transmission, in which the respective pivot shafts 15, 15 being centers of inclined rotation of the power roller 8a are present radially outwardly of the both disks 1, 6 relative to centers of curvature of the both input and output side inner side surfaces 3, 7 defining axial one sided surfaces of the both input and output side disks 1, 6. The thrust load is not generated in case of a full-toroidal type continuously variable transmission, in which the centers of inclined rotation and the centers of curvature agree positionally with each other.

With the half-toroidal type continuously variable transmission, the large thrust load elastically deforms the trunnion 9a in a direction, in which the inner side surface thereof defines a concave surface, as shown in an exaggerated manner in Fig. 15 at the time of operation. Based on the elastic deformation, the circular recess 33 is deformed in a direction, in which an opening thereof is decreased in inside diameter, so that the inner peripheral surface of the circular recess 33 and the outer peripheral surface of the crank member 34 abut intensely against each other partially in a circumferential direction (the circular recess 33 bites the crank member 34). Consequently, a force (slide resistance) required for rotating the crank member 34 in the circular recess 33 increases, so that even in the case where the respective constituent members are elastically deformed, the power roller 8a becomes hard to be displaced in the axial direction of the both input and output side disks 1, 6. In order to displace the power roller 8a in the axial direction in spite of a large slide resistance, it is necessary to increase a force, by which the input side disk 1 is pushed toward the output side disk 6. An increase in the force is not preferable because of leading to large-sizing of a pressing device and an increase in hydraulic pressure being introduced into the pressing device (in the case where a hydraulic pressing device is used), which prevents miniaturization-lightening and increases loss of motive power based on an increase in motive power for driving of a pump that feeds a pressurized oil. Further, in the case where the slide resistance is increased considerably, an excessive force acts on the swinging frame 13 and that bearing in the traction regions, which relates to the respective power rollers 8a, is not only excessive partially but also the bearing differs much between the input side inner side surface 3 and the output side inner side surface 7. This is responsible for a decrease in durability and transmission efficiency and so not preferable.

When an inside diameter of the circular recess 33 is made larger than an outside diameter of the crank member 34, it is possible to prevent an increase in slide resistance, which is caused as described above. In this case, however, there is generated a possibility that the crank member 34 is inadvertently displaced inside the circular recess 33 in the axial directions of the respective pivot shafts 15, 15. The crank member 34 is displaced in the axial directions of the respective pivot shafts 15, 15 with the result that the power roller 8a supported on the crank member 34 through the support shaft 10a is displaced in the directions and then side slip is generated in the respective traction regions as described above to cause unintentional motions of speed change to begin, so that such arrangement cannot be adopted.

Patent Document 1: JP-A-3-74667
Patent Document 2: JP-A-2001-165262
Patent Document 3: German Patent Unexamined Publication No. 10246432 (DE10246432A1)
Non-Patent Document 1: "Separate Volume Best Car, Red Badge Series 245/Book for Understanding of Latest Mechanism of Car" written by Motoo Aoyama, Sanyu-sha Ltd./Koudan-sha Ltd., December 20, 2001, pages 92-93
Non-Patent Document 2: "Toroidal CVT" written by Hirohisa Tanaka, Corona Ltd., July 13, 2000

### DISCLOSURE OF THE INVENTION

### PROBLEMS THAT THE INVENTION IS TO SOLVE

In view of the situation described above, the invention has been thought of to realize a construction that eliminates an intense friction between an inner peripheral surface of a circular recess formed on an inner side surface of a trunnion and an outer peripheral surface of a crank member even in the case where a thrust load elastically deforms a trunnion when a half-toroidal type continuously variable transmission is operated while unintentional motions of speed change are prevented from being performed.

### MEANS FOR SOLVING THE PROBLEM

The invention is attained by the following construction.
(1) A half-toroidal type continuously variable transmission comprising
   at least a pair (for example, two pairs) of disks supported to be concentric relative to each other and capable of relative rotation in a state, in which axial one sided surfaces, respectively, defining a toroidally curved surface being arcuate in section are caused to face each other,
   a plurality (for example, three every cavity, that is, six in total) of trunnions provided in a plurality of locations in an axial direction and circumferentially of positions between the axial one sided surfaces of the respective disks to be capable of swinging displacements about pivot shafts positioned angularly relative to central axes of the respective disks,
   a plurality of support shafts, on the respective trunnions, comprising a base portion supported to be capable of swinging and a support shaft portion provided eccentric to the base portion,
   a plurality (for example, three every cavity, that is, six in total) of power rollers, which are supported on inner side surfaces of the respective trunnions to be capable of rotation round the support shaft portions of the respective support shafts and of which peripheral surfaces being made a spherically convex surface are caused to abut against the axial one sided surfaces of the both disks,
   a circular crank member fitted rotatably into a circular recess formed on the inner side surfaces of the respective trunnions, and
   wherein the base portion of the support shaft is fitted internally in a circular hole formed in a position offset from a center of the crank member without play to be capable of swinging, whereby as the axial one sided surfaces of the both disks are displaced in an axial direction, the respective power rollers are displaced in the axial direction,
   the half-toroidal type continuously variable transmission **characterized in that** in a state, in which a thrust load is not applied on the inner side surfaces of the respective trunnions by the respective power rollers, a clearance having a wedge-shaped section is formed over a whole perimeter of the circular recess between an inner peripheral surface of the circular recess and an outer peripheral surface of the crank member to be small in width in a diametrical direction to a deep side of the circular recess and to be large in width in direction to an opening of the circular recess.
(2) The half-toroidal type continuously variable transmission described in (1), wherein the inner peripheral surface of the circular recess comprises a cylindrical surface being not varied in inside diameter in an axial direction of the circular recess, and at least a part of the outer peripheral surface of the crank member facing toward the opening of the circular recess comprises a conical, convex surface inclined in a direction, in which it is decreased in outside diameter toward the power roller.
(3) The half-toroidal type continuously variable transmission described in (2), wherein an outer peripheral surface side portion with a cylindrical surface portion being not varied in outside diameter in an axial direction of the crank member is provided on that axial portion of the outer peripheral surface of the crank member, which is positioned at a deep end of the circular recess.
(4) The half-toroidal type continuously variable transmission described in (1), wherein the outer peripheral surface of the crank member comprises a cylindrical surface being not varied in outside diameter in an axial direction of the crank member and at least a part of the inner peripheral surface of the circular recess comprises a conical, concave surface inclined in a direction, in which it is increased in inside diameter toward the power roller.
(5) The half-toroidal type continuously variable transmission described in (4), wherein an inner peripheral surface side portion with a cylindrical surface portion being not varied in inside diameter in an axial direction of the circular recess is provided on a deep end portion of the circular recess being a part of the inner peripheral surface of the circular recess.
(6) The half-toroidal type continuously variable transmission described in any one of (1) to (5), wherein at least one of an outer peripheral surface of the crank member and an inner peripheral surface of the circular recess is provided with a lubricating film, which is formed by striking a solid lubricant against the peripheral surface.

### EFFECT OF THE INVENTION

With the half-toroidal type continuously variable transmission of the invention constructed in a manner described above, even in the case where a thrust load elastically deforms a trunnion at the time of operation, an intense friction between an inner peripheral surface of the circular recess formed on the inner side surface of the trunnion and an outer peripheral surface of the crank member is eliminated. That is, even when keeping with the elastic deformation, the opening of the circular recess is decreased in inside diameter in a partial region in a circumferential direction, the wedge-shaped clearance present in the region becomes only small in width but the both peripheral surfaces do not rub intensely against each other in the region. Therefore, it is possible to restrict that force, which is required for displacement of the power roller in an axial direction of the respective disks, to a lower magnitude, thus enabling miniaturization-lightening and reduction in loss of motive power. Also, by preventing an excessive force from acting on respective constituent parts and preventing bearing in a traction region related to each of the power roller from becoming markdedly uneven, it is possible to achieve an improvement in durability and transmission efficiency. Also, since the inner peripheral surface of the circular recess and the outer peripheral surface of the crank member fit together in a region, in which the clearance becomes small in width, without play, the crank member is not displaced in the axial direction of the pivot shaft and inadvertent motions of speed change are not performed.

Also, with the construction described in (3), an outer peripheral surface side portion cylindrical surface portion is provided in addition to the construction of (1) and (2), so that it is possible to ensure a contact area between the both peripheral surfaces while suppressing displacement of the crank member in the circular recess in a diametrical direction of the circular recess and the crank member. Therefore, while ensuring a necessary clearance, it is possible to prevent contact portions of the both peripheral surfaces from being increased in bearing, thus enabling preventing generation of damages such as considerable abrasion, peeling, etc. on the both peripheral surfaces. Since the deep portion of the circular recess is little varied in inside diameter even when the trunnion is elastically deformed, the crank member is not increased in rotational resistance owing to the presence of the outer peripheral surface side portion with the cylindrical surface portion.

Further, with the construction described in (5), an inner peripheral surface side portion cylindrical surface portion is provided in addition to the construction of (1) and (4), so that in the same manner as in the invention described in (3), it is possible to ensure a contact area between the both peripheral surfaces while inhibiting the circular recess and the crank member from being displaced in a diametrical direction, thus enabling preventing generation of damages such as considerable abrasion, peeling, etc. on the both peripheral surfaces. Like the case (3), the crank member is not increased in rotational resistance owing to the presence of the inner peripheral surface side portion with the cylindrical surface portion.

Also, in embodying the invention, the lubricating film described in (6) is preferably provided, in which case it is possible to further adequately produce an effect of suppressing abrasion and peeling on the both peripheral surfaces.

### BRIEF DESCRIPTION OF THE DRAWINGS

[Fig. 1] Fig. 1 is an exploded, perspective view showing an essential part of Embodiment 1 of the invention.
[Fig. 2] Fig. 2 shows a crank member incorporated into Embodiment 1, Fig. 2(A) being a plan view, Fig. 2(B) being a side view, and Fig. 2(C) being a perspective view.
[Fig. 3] Fig. 3 is a view showing a crank member incorporated into Embodiment 2 and being similar to Fig. 2.
[Fig. 4] Fig. 4 shows a trunnion incorporated into Embodiment 3, Fig. 4 (A) being a view as viewed from an inner side surface, and Fig. 4(B) being a cross sectional view.
[Fig.5] Fig. 5 is a view showing a crank member incorporated into Embodiment 3 and being similar to Fig. 2.
[Fig. 6] Fig. 6 shows a trunnion incorporated into Embodiment 4 and being similar to Fig. 4.
[Fig. 7] Fig. 7 is a cross sectional view showing a first example of a conventional construction.
[Fig. 8] Fig. 8 is a perspective view showing an essential part of a second example.
[Fig. 9] Fig. 9 is a view showing a part of Fig. 8, as viewed in an axial direction of respective disks.
[Fig. 10] Fig. 10 is an exploded, perspective view showing a state, in which a trunnion and a power roller are taken out.
[Fig. 11] Fig. 11 is a view showing an assembled state, Fig. 11(A) being a view as viewed from an inner side surface side of a trunnion, and Fig. 11(B) being a cross sectional view.
[Fig. 12] Fig. 12 is a view showing the same state, Fig. 12 (A) being a perspective view as viewed from an inner side surface side of a trunnion, and Fig. 12(B) being a perspective view, as viewed from an outer side surface side, with a part being cut out.
[Fig. 13] Fig. 13 is a schematic view showing a linkage being equivalent to a support portion of a power roller for a trunnion.
[Fig. 14] Fig. 14 is a schematic view illustrating the reason why a power roller makes a linear motion.
[Fig. 15] Fig. 15 is a cross sectional view showing a trunnion to illustrate a disadvantage generated in a conventional construction.

### DESCRIPTION OF REFERENCE NUMERALS AND SIGNS

1, 1a, 1b: input side disk
2: input rotating shaft
3: input side inner side surface
4: output gear
5: output cylinder
6: output side disk
7: output side inner side surface
8, 8a: power roller
9, 9a: trunnion
10, 10a: support shaft
11: driving shaft
12: pressing device
13: swinging frame
14: support plate portion
15: pivot shaft
16, 16a: sector gear
17: cam device
18: actuator
19: cam follower
20: housing
21: cam member
22: cam groove
23: piston
24: pin
25: joint bracket
26: base portion
27: support shaft portion
28: radial needle bearing
29: outer ring for a thrust bearing
30: cage
31: ball
32: thrust ball bearing
33, 33a, 33b: circular recess
34, 34a, 34b: crank member
35: circular hole
36: slot
37: guide rod
38: cylindrical surface
39, 39a: conical, convex surface
40: outer peripheral surface side portion cylindrical surface portion -
41: cylindrical surface
42, 42a: conical, concave surface
43: inner peripheral surface side portion cylindrical surface portion

### BEST MODE FOR CARRYING OUT THE INVENTION

### (Embodiment 1)

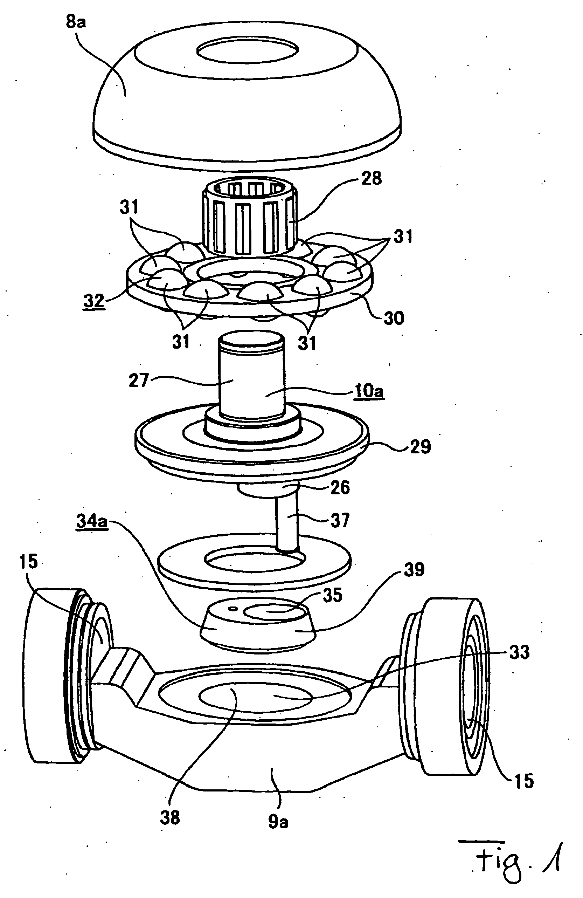

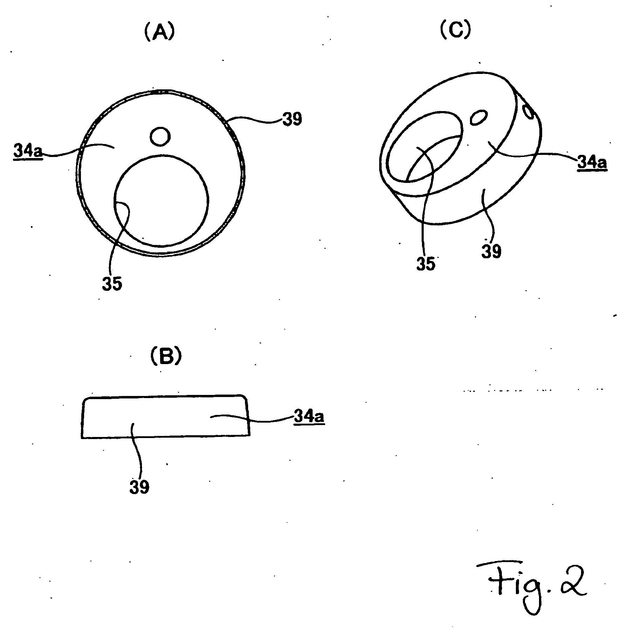

Figs. 1 and 2 show Embodiment 1 of the invention. In addition, the embodiment has a feature in that a shape of an outer peripheral surface of a crank member 34a is contrived to prevent unintentional motions of speed change from being performed and that in the case where a thrust load elastically deforms a trunnion 9a when a half-toroidal type continuously variable transmission is operated, an intense friction between an inner peripheral surface of a circular recess 33 formed on an inner side surface of the trunnion 9a and an outer peripheral surface of the crank member 34a is prevented. Since the remaining parts are the same in constitution and function as those of the conventional construction shown in Figs. 8 to 12 and described in Patent Document 3, depiction and an explanation with respect to the equivalent parts are omitted or simplified and an explanation will be mainly given to a characteristic part of the embodiment.

With the embodiment, the inner peripheral surface of the circular recess 33 comprises a simple, cylindrical surface 38 being not varied in inside diameter in an axial direction of the circular recess 33 in the same manner as in the conventional construction. In contrast, the whole, outer peripheral surface of the crank member 34a comprises a conical, convex surface 39 inclined in a direction, in which it is decreased in outside diameter toward a power roller 8a. Such outside diameter of the crank member 34a is the same as an inside diameter of the circular recess 33, or slightly smaller than the inside diameter of the circular recess 33 (in that order, which affords the work of insertion, for example, in the order of ten to several tens [micro]m) at a large diameter side end of the conical, convex surface 39. In addition, provided in the crank member 34a is a lubricating oil flow passage, through which a lubricating oil fed through a lubrication passage provided in the trunnion 9a is distributed to both inner and outer peripheral surfaces of the crank member 34a.

The crank member 34a is fitted internally into the circular recess 33 in a state, in which the large diameter side end of the conical, convex surface 39 is disposed deep in the circular recess 33. Accordingly, a clearance having a wedge-shaped section is formed over a whole perimeter of the circular recess 33 between the conical, convex surface 39 and the cylindrical surface 38 to be small in width in a diametrical direction toward the deep side of the circular recess 33 and to be large in width toward an opening of the circular recess 33.

Therefore, in the case where a thrust load acted by the power roller 8a elastically deforms the trunnion 9a when the half-toroidal type continuously variable transmission is operated, an intense friction between the inner peripheral surface (the cylindrical surface 38) of the circular recess 33 formed on the inner side surface of the trunnion 9a and the outer peripheral surface (the conical, convex surface 39) of the crank member 34a is eliminated. That is, even when keeping with the elastic deformation, the opening of the circular recess 33 is decreased in inside diameter in a partial region in a circumferential direction, the wedge-shaped clearance present in the region becomes only small in width but the both peripheral surfaces do not rub intensely against each other in the region. Therefore, it is possible to restrict that force, which is required for displacement of the power roller 8a in an axial direction of respective input and output side disks 1, 6 (see Fig. 8), to a lower magnitude. Accordingly, there is no need of using an especially big one as a pressing device for generation of the force, so that it is possible to accomplish miniaturization-lightening of the half-toroidal type continuously variable transmission including the pressing device. Also, when the pressing device is of a hydraulic type, an improvement in transmission efficiency is achieved owing to reduction in loss of motive power for driving of a pump that feeds a pressurized oil to the pressing device. Also, by preventing an excessive force from acting on respective constituent parts such as a swinging frame 13 (see Figs. 8 and 9), etc. and preventing bearing in a traction region related to the power roller 8a from becoming partially excessive, or considerably uneven, it is possible to achieve an improvement in durability and transmission efficiency.

### (Embodiment 2)

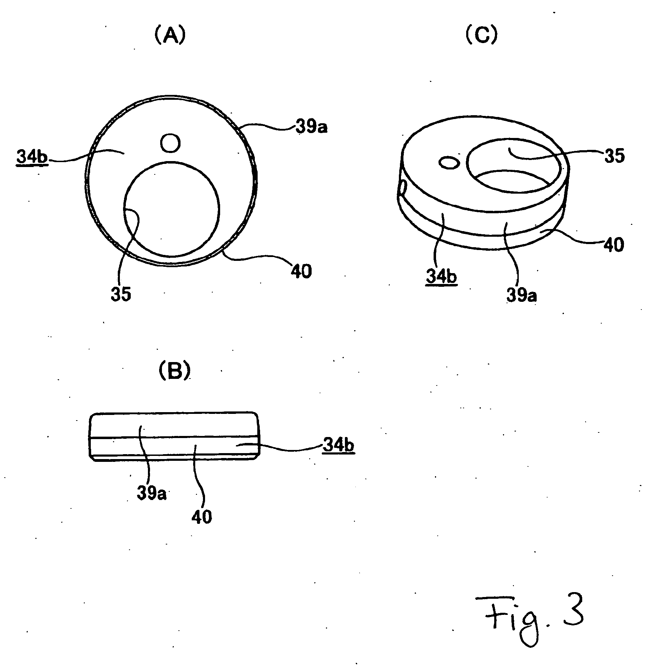

Fig. 3 shows Embodiment 2 of the invention. With the embodiment, an outer peripheral surface side portion cylindrical surface portion 40 being not varied in outside diameter in an axial direction of a crank member 34b is provided over a whole periphery on that axial portion of an outer peripheral surface of the crank member 34b, which is positioned at a deep end of the circular recess 33 (see Fig. 1). An outside diameter of the outer peripheral surface side portion cylindrical surface portion 40 is slightly smaller than the inside diameter of the circular recess 33 (in that order, which affords the work of insertion, for example, in the order of ten to several tens µm). Also, the remaining, axial portion of the crank member 34b comprises a conical, convex surface 39a inclined in a direction, in which it is decreased in outside diameter with a distance from the outer peripheral surface side portion cylindrical surface portion 40.

With the embodiment, the outer peripheral surface side portion cylindrical surface portion 40 is provided to ensure a contact area between the outer peripheral surface (the outer peripheral surface side portion cylindrical surface portion 40) of the crank member 34b and the cylindrical surface 38 (see Fig. 1), which defines the inner peripheral surface of the circular recess 33, while suppressing displacement of the crank member 34b in a diametrical direction of the circular recess 33 and the crank member 34b within the circular recess 33. Therefore, while ensuring a clearance required for guaranteeing a smooth rotation of the crank member 34b within the circular recess 33, it is possible to prevent contact portions of the both peripheral surfaces from being increased in bearing, thus enabling preventing generation of damages such as considerable abrasion, peeling, etc. on the both peripheral surfaces. Since the remaining parts except the outer peripheral surface side portion cylindrical surface portion 40 are the same in constitution and function as those of Embodiment 1, duplicate depiction and explanation are omitted.

### (Embodiment 3)

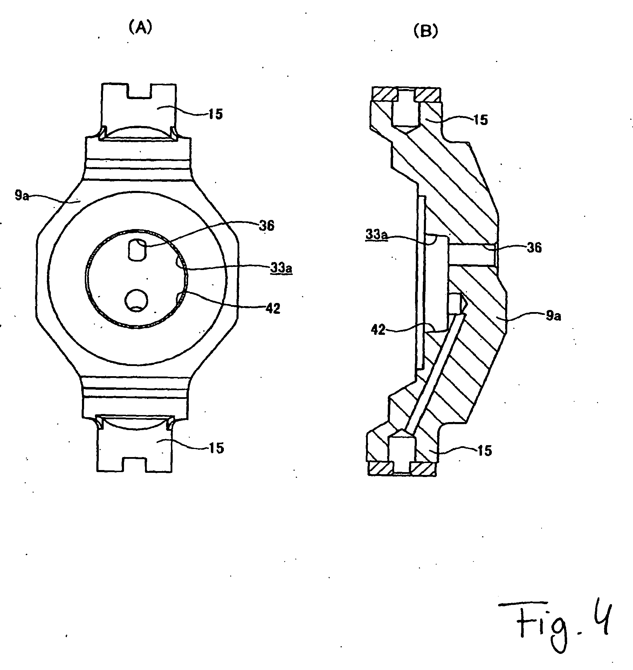

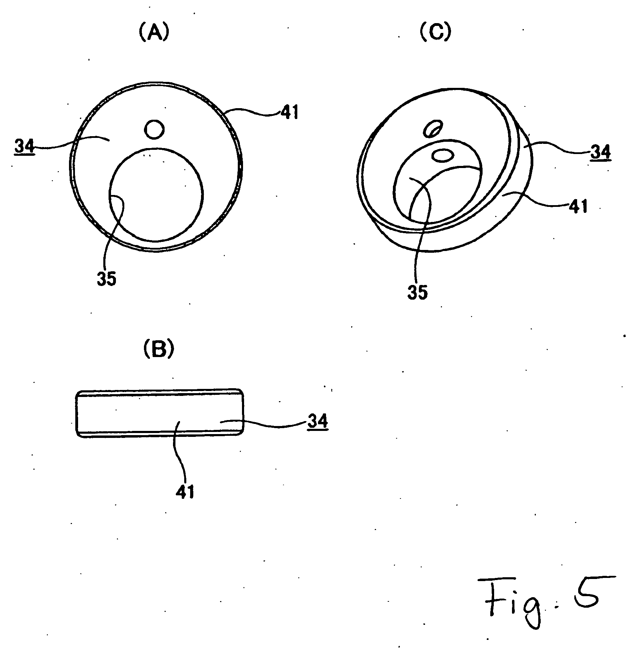

Figs. 4 and 5 show Embodiment 3 of the invention. With the embodiment, an outer peripheral surface of a crank member 34 comprises a cylindrical surface 41 being not varied in outside diameter in an axial direction of the crank member 34 in the same manner as in the conventional construction described in Patent Document 3. Instead, an inner peripheral surface of a circular recess 33a formed in a state of being opened to an inner side surface of a trunnion 9a comprises a conical, concave surface 42 inclined in a direction, in which it is increased in inside diameter toward a power roller. Such inside diameter of the conical, concave surface 42 is the same as an outside diameter of the crank member 34, or slightly larger than the outside diameter of the crank member 34 (in that order, which affords the work of insertion, for example, in the order of ten to several tens µm) at a small diameter side end of the conical, concave surface 42.

In a state, in which the crank member 34 is fitted internally into the circular recess 33a, a clearance having a wedge-shaped section is formed over a whole periphery of the circular recess 33a between the conical, concave surface 42 and the cylindrical surface 41 to be small in width in a diametrical direction toward the deep side of the circular recess 33a and to be large in width toward an opening of the circular recess 33a. Therefore, with the embodiment, also in the case where the trunnion 9a is elastically deformed when the half-toroidal type continuously variable transmission is operated, an intense friction between the inner peripheral surface (the conical, concave surface 42) of the circular recess 33a formed on the inner side surface of the trunnion 9a and the outer peripheral surface (the cylindrical surface 41) of the crank member 9a is eliminated.

### (Embodiment 4)

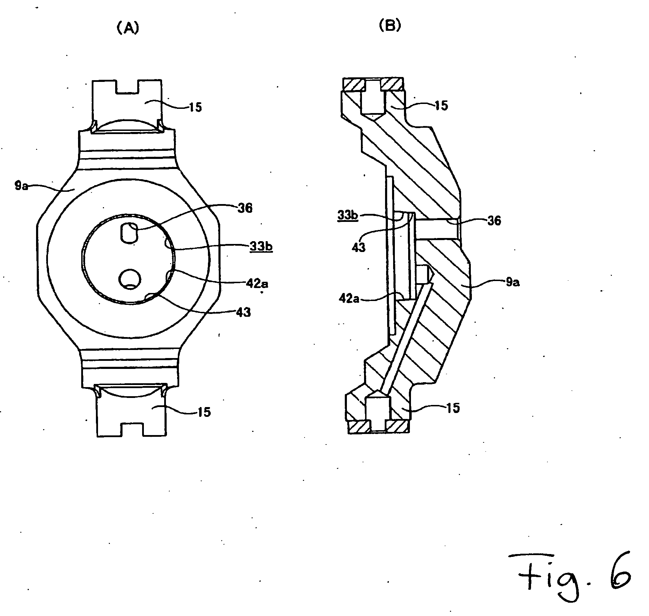

Fig. 6 shows Embodiment 4 of the invention. With the embodiment, an inner peripheral surface side portion cylindrical surface portion 43 being not varied in inside diameter in an axial direction of a circular recess 33b is provided over a whole periphery on a deep end portion of the circular recess 33b opened to an inner side surface of a trunnion 9a. An inside diameter of the inner peripheral surface side portion cylindrical surface portion 43 is slightly (.in that order, which affords the work of insertion, for example, in the order of ten to several tens µm) larger than the outside diameter of a crank member 34 (see Fig. 5). Also, the remaining, axial portion of the circular recess 33b comprises a conical, concave surface 42a inclined in a direction, in which it is increased in inside diameter with a distance from the inner peripheral surface side portion cylindrical surface portion 43.

With the embodiment, the inner peripheral surface side portion cylindrical surface portion 43 is provided to ensure a contact area between an outer peripheral surface (cylindrical surface 41) of the crank member 34 and the inner peripheral surface side portion cylindrical surface portion 43, which defines a part of an inner peripheral surface of the circular recess 33b, while suppressing displacement of the crank member 34 in a diametrical direction of the circular recess 33b and the crank member 34 within the circular recess 33b. Therefore, while ensuring a clearance required for guaranteeing a smooth rotation of the crank member 34 within the circular recess 33b, it is possible to prevent contact portions of the both peripheral surfaces from being increased in bearing, thus enabling preventing generation of damages such as considerable abrasion, peeling, etc. on the both peripheral surfaces. Since the remaining parts except the inner peripheral surface side portion cylindrical surface portion 43 are the same in constitution and function as those of Embodiment 3, duplicate depiction and explanation are omitted.

In addition, the invention is not limited to the respective embodiments described above but can be suitably modified, improved, and so on. For example, an outer peripheral surface of a crank member, on which at least a portion of a circular recess toward an opening thereof comprises a conical, convex surface inclined in a direction, in which it is decreased in outside diameter toward a power roller, and an inner peripheral surface of a circular recess, on which at least a portion toward an opening comprises a conical, concave surface inclined in a direction, in which it is increased in inside diameter toward a power roller, can be used in combination.

The construction of the invention is preferably applied to a construction provided in a state of preventing axial displacements of respective pivot shafts 15, 15, at both ends of which are coaxially provided respective trunnions 9a, 9a, as shown in Figs. 8 and 9. With the construction shown in Fig. 7, it is assumed that the respective trunnions 9, 9 are displaced in axial directions of the respective pivot shafts, at both ends of which are coaxially provided the respective trunnions. Accordingly, with the construction shown in Fig. 7, side slip can be prevented from being generated in traction regions when the change gear ratio is not adjusted and a force required for adjustment of a change gear ratio can be prevented from becoming excessive, without resorting to the construction of the invention. However, application of the construction of the invention to the construction shown in Fig. 7 is free. Such application produces a function-effect, by which tuning for synchronization of a change gear ratio between respective cavities is made easy (for example, in a construction, in which an axial position of an output side disk is not fixed).

Also, in case of embodying the invention, when at least one of an outer peripheral surface of a crank member and an inner peripheral surface of a circular recess is provided with a lubricating film, which is formed by striking a solid lubricant against the peripheral surface, it is possible to more adequately produce an effect of suppressing abrasion and peeling of the both peripheral surfaces. Since the lubricating film obtained by vigorous striking of a solid lubricant can ensure a sufficient durability in use over a long term, it is effective in terms of prevention of the abrasion and peeling. In this case, from the viewpoint of readily doing the work of forming the lubricating film, it is preferred that a surface formed with the lubricating film be made a whole surface of a crank member, which includes an outer peripheral surface of the crank member.

## Claims

1. A half-toroidal type continuously variable transmission comprising
at least a pair of disks supported to be concentric relative to each other and capable of relative rotation in a state, in which axial one sided surfaces, respectively, defining a toroidally curved surface being arcuate in section are caused to face each other,
a plurality of trunnions (9a) provided in a plurality of locations in an axial direction and circumferentially of positions between the axial one sided surfaces of the respective disks to be capable of swinging displacements about pivot shafts positioned angularly relative to central axes of the respective disks,
a plurality of support shafts, on the respective trunnions (9a), comprising a base portion supported to be capable of swinging and a support shaft portion provided eccentric to the base portion,
a plurality of power rollers (8a), which are supported on inner side surfaces of the respective trunnions (9a) to be capable of rotation round the support shaft portions of the respective support shafts and of which peripheral surfaces being made a spherically convex surface are caused to abut against the axial one sided surfaces of the both disks,
a circular crank member (34a) fitted rotatably into a circular recess (33) formed on the inner side surfaces of the respective trunnions (9a), and
wherein the base portion of the support shaft is fitted internally in a circular hole formed in a position offset from a center of the crank member (34a) without play to be capable of swinging, whereby as the axial one sided surfaces of the both disks are displaced in an axial direction, the respective power rollers (8a) are displaced in the axial direction,
the half-toroidal type continuously variable transmission **characterized in that** in a state, in which a thrust load is not applied on the inner side surfaces of the respective trunnions (9a) by the respective power rollers (8a), a clearance having a wedge-shaped section is formed over a whole perimeter of the circular recess (33) between an inner peripheral surface of the circular recess (33) and an outer peripheral surface of the crank member (34b) to be small in width in a diametrical direction to a deep side of the circular recess (33) and to be large in width to an opening of the circular recess (33).

2. The half-toroidal type continuously variable transmission according to claim 1, wherein the inner peripheral surface of the circular recess (33) comprises a cylindrical (38) surface being not varied in inside diameter in an axial direction of the circular recess (33), and at least a part of the outer peripheral surface of the crank member (34b) facing toward the opening of the circular recess (33) comprises a conical, convex surface (39) inclined in a direction, in which it is decreased in outside diameter in direction to the power roller.

3. The half-toroidal type continuously variable transmission according to claim 2, wherein an outer peripheral surface side portion with a cylindrical surface portion (40) being not varied in outside diameter in an axial direction of the crank member (34b) is provided on that axial portion of the outer peripheral surface of the crank member (34b), which is positioned at a deep end of the circular recess (33).

4. The half-toroidal type continuously variable transmission according to claim 1, wherein the outer peripheral surface of the crank member (34) comprises a cylindrical surface (41) being not varied in outside diameter in an axial direction of the crank member (34) and at least a part of the inner peripheral surface (42) of the circular recess (33a) comprises a conical, concave surface inclined in a direction, in which it is increased in inside diameter toward the power roller (8a).

5. The half-toroidal type continuously variable transmission according to claim 4, wherein an inner peripheral surface side portion with a cylindrical surface portion (38) being not varied in inside diameter in an axial direction of the circular recess (33) is provided on a deep end portion of the circular recess (33) being a part of the inner peripheral surface of the circular recess (33).

6. The half-toroidal type continuously variable transmission according to any one of claims 1 to 5, wherein at least one of an outer peripheral surface of the crank member (34) and an inner peripheral surface of the circular recess (33a) is provided with a lubricating film, which is formed by striking a solid lubricant against the peripheral surface.

## Patentansprüche

1. Stufenlos verstellbares Getriebe des Halbtoroid-Typs, das Folgendes umfasst:
wenigstens ein Paar Scheiben, die so getragen werden, dass sie zueinander konzentrisch sind und sich in einem Zustand, in dem bewirkt wird, dass axialseitige Oberflächen, die jeweils eine im Querschnitt gebogene toroidförmig gekrümmte Oberfläche definieren, einander zugewandt sind, relativ zueinander drehen können,
mehrere Drehzapfen (9a), die in axialer Richtung und in Umfangsrichtung zwischen den axialseitigen Oberflächen der jeweiligen Scheiben an mehreren Orten vorgesehen sind, um sich um Schwenkwellen, die in Winkelrichtung relativ zu der Mittelachse der jeweiligen Scheiben positioniert sind, schwingend verlagern zu können,
mehrere Tragwellen an den jeweiligen Drehzapfen (9a), die einen Basisabschnitt, der getragen wird, um zu schwingen, und einen Tragwellenabschnitt, der exzentrisch zu dem Basisabschnitt vorgesehen ist, aufweisen,
mehrere Antriebsrollen (8a), die an innenseitigen Oberflächen der jeweiligen Drehzapfen (9a) so getragen werden, dass sie sich um die Tragwellenabschnitte der jeweiligen Tragwellen drehen können, und deren Umfangsoberflächen, die jeweils als eine sphärisch konvexe Oberfläche ausgebildet sind, dazu veranlasst werden, an den axialseitigen Oberflächen der beiden Scheiben anzuliegen, und
ein kreisförmiges Kurbelelement (34a), das in eine kreisförmige Aussparung (33), die an den innenseitigen Oberflächen der jeweiligen Drehzapfen (9a) ausgebildet ist, drehbar eingesetzt ist,
wobei der Basisabschnitt der Tragwelle innen in ein kreisförmiges Loch, das an einer zu einem Zentrum des Kurbelelements (34a) versetzten Position ausgebildet ist, ohne Spiel eingesetzt ist, um schwingen zu können, wodurch die axialseitigen Oberflächen der beiden Scheiben in einer axialen Richtung verlagert werden, wobei die jeweiligen Antriebsrollen (8a) in der Axialrichtung verlagert werden, und
wobei das stufenlos veränderliche Getriebe des Halbtoroid-Typs **dadurch gekennzeichnet ist, dass** in einem Zustand, in dem auf die innenseitigen Oberflächen der jeweiligen Drehzapfen (9a) durch die jeweiligen Antriebsrollen (8a) keine Schublast ausgeübt wird, über einem gesamten Umfang der kreisförmigen Aussparung (33) zwischen einer inneren Umfangsoberfläche der kreisförmigen Aussparung (33) und einer äußeren Umfangsoberfläche des Kurbelelements (34b) ein Zwischenraum mit keilförmigem Querschnitt gebildet ist, der in diametraler Richtung zu einer tiefen Seite der kreisförmigen Aussparung (33) eine geringe Weite hat und in Richtung zu einer Öffnung der kreisförmigen Aussparung (33) eine große Weite hat.

2. Stufenlos veränderliches Getriebe des Halbtoroid-Typs nach Anspruch 1, wobei die innere Umfangsoberfläche der kreisförmigen Aussparung (33) eine zylindrische Oberfläche (38) umfasst, deren Innendurchmesser in axialer Richtung der kreisförmigen Aussparung (33) nicht veränderlich ist, und wobei wenigstens ein Teil der äußeren Umfangsoberfläche des Kurbelelements (34b), die zu der Öffnung der kreisförmigen Aussparung (33) weist, eine konische, konvexe Oberfläche (39) aufweist, die in einer Richtung, in der ihr Außendurchmesser in Richtung der Antriebsrolle abnimmt, geneigt ist.

3. Stufenlos veränderliches Getriebe des Halbtoroid-Typs nach Anspruch 2, wobei an dem axialen Abschnitt der äußeren Umfangsoberfläche des Kurbelelements (34b), der bei einem tiefen Ende der kreisförmigen Aussparung (33) positioniert ist, ein Abschnitt auf Seiten der äußeren Umfangsoberfläche mit einem zylindrischen Oberflächenabschnitt (40), dessen Außendurchmesser in axialer Richtung des Kurbelelements (34b) nicht veränderlich ist, vorgesehen ist.

4. Stufenlos veränderliches Getriebe des Halbtoroid-Typs nach Anspruch 1, wobei die äußere Umfangsoberfläche des Kurbelelements (34) eine zylindrische Oberfläche (41) umfasst, deren Außendurchmesser in axialer Richtung des Kurbelelements (34) nicht veränderlich ist, und wenigstens ein Teil der inneren Umfangsoberfläche (42) der kreisförmigen Aussparung (33a) eine konische, konkave Oberfläche aufweist, die in einer Richtung, in der ihr Innendurchmesser in Richtung zu der Antriebsrolle (8a) zunimmt, geneigt ist.

5. Stufenlos veränderliches Getriebe des Halbtoroid-Typs nach Anspruch 4, wobei an einem tiefen Endabschnitt der kreisförmigen Aussparung (33), der einen Teil der inneren Umfangsoberfläche der kreisförmigen Aussparung (33) bildet, ein Abschnitt auf Seiten der inneren Umfangsoberfläche, der einen zylindrischen Oberflächenabschnitt (38) aufweist, dessen Innendurchmesser in axialer Richtung der kreisförmigen Aussparung (33) nicht veränderlich ist, vorgesehen ist.

6. Stufenlos veränderliches Getriebe des Halbtoroid-Typs nach einem der Ansprüche 1 bis 5, wobei wenigstens eine äußere Umfangsoberfläche des Kurbelelements (34) und eine innere Umfangsoberfläche der kreisförmigen Aussparung (33a) mit einem Schmierfilm versehen sind, der durch Schleudern eines Feststoffschmiermittels gegen die Umfangsoberfläche gebildet wird.

## Revendications

1. Transmission à variation continue de type semi-toroïdal, comprenant :
au moins une paire de disques supportés de manière à être concentriques les uns par rapport aux autres et capables de tourner les uns par rapport aux autres dans un état dans lequel des surfaces axiales à un côté, définissant respectivement une surface de courbure toroïdale de section arquée, sont amenées à se faire face,
une pluralité de tourillons (9a) prévus dans une pluralité d'emplacements dans une direction axiale et circonférentiellement par rapport à des positions entre les surfaces axiales à un côté des disques respectifs de manière à être capables d'effectuer des mouvements d'oscillation autour d'arbres de pivotement positionnés angulairement par rapport à des axes centraux des disques respectifs,
une pluralité d'arbres de support, sur les tourillons respectifs (9a), comprenant une portion de base supportée de manière à être capable d'osciller et une portion d'arbre de support prévue de manière excentrique par rapport à la portion de base,
une pluralité de rouleaux de puissance (8a), qui sont supportés sur des surfaces du côté interne des tourillons respectifs (9a) de manière à être capables de tourner autour des portions d'arbre de support des arbres de support respectifs et dont des surfaces périphériques sous forme de surface convexe sphérique sont amenées à buter contre les surfaces axiales à un côté des deux disques,
un organe de manivelle circulaire (34a) ajusté de manière rotative dans un retrait circulaire (33) formé sur les surfaces du côté interne des tourillons respectifs (9a), et
dans laquelle la portion de base de l'arbre de support est ajustée intérieurement dans un trou circulaire formé dans une position décalée par rapport à un centre de l'organe de manivelle (34a) sans jeu de manière à être capable d'osciller, les rouleaux de puissance respectifs (8a) étant ainsi déplacés dans la direction axiale à mesure que les surfaces axiales à un côté des deux disques sont déplacées dans une direction axiale,
la transmission à variation continue de type semi-toroïdal étant **caractérisée en ce que**, dans un état dans lequel une charge de poussée n'est pas appliquée aux surfaces du côté interne des tourillons respectifs (9a) par les rouleaux de puissance respectifs (8a), un dégagement ayant une section en forme de coin est formé sur un périmètre complet du retrait circulaire (33) entre une surface périphérique interne du retrait circulaire (33) et une surface périphérique externe de l'organe de manivelle (34b) de manière à avoir une petite largeur dans une direction diamétrale vers un côté profond du retrait circulaire (33) et de manière à avoir une grande largeur vers une ouverture du retrait circulaire (33).

2. Transmission à variation continue de type semi-toroïdal selon la revendication 1, dans laquelle la surface périphérique interne du retrait circulaire (33) comprend une surface cylindrique (38) dont le diamètre intérieur ne varie pas dans une direction axiale du retrait circulaire (33), et au moins une partie de la surface périphérique externe de l'organe de manivelle (34b) tournée vers l'ouverture du retrait circulaire (33) comprend une surface conique convexe (39) inclinée dans une direction dans laquelle son diamètre extérieur diminue dans la direction du rouleau de puissance.

3. Transmission à variation continue de type semi-toroïdal selon la revendication 2, dans laquelle une portion de côté de surface périphérique externe avec une portion de surface cylindrique (40) dont le diamètre extérieur ne varie pas dans une direction axiale de l'organe de manivelle (34b) est prévue sur la portion axiale de la surface périphérique externe de l'organe de manivelle (34b) qui est positionnée à une extrémité profonde du retrait circulaire (33).

4. Transmission à variation continue de type semi-toroïdal selon la revendication 1, dans laquelle la surface périphérique externe de l'organe de manivelle (34) comprend une surface cylindrique (41) dont le diamètre extérieur ne varie pas dans une direction axiale de l'organe de manivelle (34) et au moins une partie de la surface périphérique interne (42) du retrait circulaire (33a) comprend une surface conique concave inclinée dans une direction dans laquelle son diamètre intérieur augmente vers le rouleau de puissance (8a).

5. Transmission à variation continue de type semi-toroïdal selon la revendication 4, dans laquelle une portion de côté de surface périphérique interne avec une portion de surface cylindrique (38) dont le diamètre intérieur ne varie pas dans une direction axile du retrait circulaire (33) est prévue sur une portion d'extrémité profonde du retrait circulaire (33) faisant partie de la surface périphérique interne du retrait circulaire (33).

6. Transmission à variation continue de type semi-toroïdal selon l'une quelconque des revendications 1 à 5, dans laquelle au moins l'une d'une surface périphérique externe de l'organe de manivelle (34) et d'une surface périphérique interne du retrait circulaire (33a) est pourvue d'un film lubrifiant, qui est formé par l'application d'un lubrifiant solide contre la surface périphérique.
